Europäisches Patentamt

(19) European Patent Office

Office européen des brevets

(11) Publication number : **0 310 450 B1**

(12) **EUROPEAN PATENT SPECIFICATION**

(45) Date of publication of patent specification :
04.03.92 Bulletin 92/10

(51) Int. Cl.⁵ : **A21B 5/04**

(21) Application number : **88309173.8**

(22) Date of filing : **03.10.88**

(54) **High frequency heating apparatus.**

(30) Priority : **02.10.87 JP 151881/87**

(43) Date of publication of application :
**05.04.89 Bulletin 89/14**

(45) Publication of the grant of the patent :
**04.03.92 Bulletin 92/10**

(84) Designated Contracting States :
**DE FR GB**

(56) References cited :
**CH-A- 337 317**
**US-A- 3 049 073**
**US-A- 3 254 591**

(56) References cited :
**US-A- 3 602 131**
**US-A- 3 733 999**
**US-A- 3 874 278**
**US-A- 4 409 452**

(73) Proprietor : **SHARP KABUSHIKI KAISHA**
**22-22 Nagaike-cho Abeno-ku**
**Osaka 545 (JP)**

(72) Inventor : **Oya, Yuichiro**
**1006-151, Okubo Kumatori-cho**
**Sennan-gun Osaka-fu (JP)**

(74) Representative : **Brown, Kenneth Richard et al**
**R.G.C. Jenkins & Co. 26 Caxton Street**
**London SW1H 0RJ (GB)**

EP 0 310 450 B1

## Description

### BACKGROUND OF THE INVENTION

#### Field of the Invention

The present invention relates to a high frequency heating apparatus having a high frequency generating apparatus as well as heating means such as a heater. More specifically, the present invention relates to a high frequency heating apparatus which can be cleaned easily.

#### Description of the Prior Art

High frequency heating apparatuses which also have heating means such as heaters generally employ various methods for preventing uneven heating and uneven roasting to provide uniformly cooked foods. Such methods comprise rotating a pan on which the foods are placed, forcing air circulation in the heating chamber using a fan, and so on.

However, even when these methods are employed, a portion of the food in contact with the pan is not well roasted, and sometimes, upper portion and lower portion of the food are unevenly cooked due to the distribution of the broth, sources, juice and so on. Therefore, foods must be turned during cooking.

In consideration of the foregoing, an apparatus is proposed in Japanese Patent Laying-Open Gazette 10031/1982 (hereinafter referred to as a high frequency heating apparatus of D).

The high frequency heating apparatus D comprises a metal grill skewer arranged rotatively at the central portion of a heating chamber, and the food pierced by the grill skewer is rotated by rotary driving means to be heated and cooked.

Consequently, the food is uniformly roasted and the broth, source or juice is circulated around the surface of the food to uniformly go over, and therefore, the food can be cooked well. However, the high frequency heating apparatus D must employ a structure for preventing leak of the high frequency energy from the high frequency heating chamber to the outside and a heat resistant structure strong enough to be used with two or more heat sources. As a result, coupling structure between the rotary driving means and the metal grill skewer is rather complicated.

More specifically, a coupling portion, which can be attached to the rotary driving means, is provided projecting from the sidewall of the heating chamber. A portion to be coupled provided on one end of the metal grill skewer capable of being coupled to the coupling portion comprises a number of parts. For example, the portion to be coupled comprises a coupling slidably mounted on the metal grill skewer, a coil spring forcing the coupling to the coupling portion side, and a washer to be engaged with the coil spring.

Consequently, residues of foods, oil and so on smudge the coupling portion and the parts constituting the member to be coupled, and therefore, the heating chamber of the high frequency heating apparatus D can not be easily cleaned.

In an apparatus, described in US 4,409,452, a metal skewer is maintained in position by a spring biasing the tip of the rod for contact with the apparatus wall.

### SUMMARY OF THE INVENTION

The present invention was made with the aim of alleviating the above described problem.

In accordance with the present invention, a mounting apparatus in a high frequency heating apparatus including a heating chamber for receiving food to be heated, said heating chamber having a front opening and at least two opposing sidewalls, means, including a high frequency source for heating the food in said heating chamber, elongate support means on which the food can be skewered, the length of said support means along the direction of suspension being shorter than the distance between said sidewalls and rotary driving means for rotating said support means in said heating chamber, the mounting apparatus comprises:

coupling means for coupling one end portion of said support means with said rotary drive means;

and means for maintaining the support means suspended between the sidewalls in the heating chamber for rotation about its axis; characterised in that said coupling means comprises a coupling member rotatably mounted entirely on the outside on one of said sidewalls, and formed at one end portion thereof adjacent that sidewall with an axial hole which opens to the interior of the heating chamber, and into which said one end portion of said support means is insertable to effect detachable engagement for transmitting rotational movement of said coupling member to said support means, and in that the means for maintaining comprises a support member removably mounted on the other sidewall for detachably and rotatably supporting the opposite end portion of the support means with the tip of said opposite end portion held at a position spaced apart from the plane of the other sidewall to provide a gap between the tip and the inner surface of the other sidewall, whereby said support means is axially displaceable to disengage said one end portion thereof from said axial hole of said coupling means and thereafter removable from said chamber through said front opening thereof. Preferably the opposite end portion of the support means has a circumferential groove which engages with the support member, and the length of the groove is preferably longer than the length of the engaging portion of the support member. The support means preferably comprises fixing means for fixing foods on the support means at the central position thereof. The coupling means has a concave portion at one end portion thereof for receiving one end portion of the support means. The concave portion has a polygon cross section, and preferably, that cross section is similar to the cross section of one end portion of the support means. A guiding member should be preferably provided for guiding one end portion of the support means to be received in the concave portion, The guiding member may be detachably attached on the inner side of one sidewall of the heating chamber.

Since the high frequency heating apparatus in accordance with the present invention is structured as described above, the support means with the food skewered therethrough is introduced in the heating chamber, and thereafter, the support means is moved in the heating chamber in the direction orthogonal to the direction of introduction. By doing so, the support means and the rotary driving means are coupled with each other, and both ends of the support means are rotatively supported by the sidewalls.

When the high frequency heating apparatus should be cleaned, the sidewalls of the heating chamber can be made smooth by removing the support means. Only a portion to be coupled is formed on one end portion of the support means, which portion can be coupled with the coupling means provided on the outer side of the sidewall of the heating chamber. Therefore, residues of foods hardly smudge the coupling means and the portion to be coupled formed on one end portion of the support means.

The foregoing and other object, features, aspects and advantages of the present invention will become more apparent from the following detailed description of the present invention when taken in conjunction with the accompanying drawings.

## BRIEF DESCRIPTION OF THE DRAWINGS

Fig. 1 is a perspective view of the inner portion of the high frequency heating apparatus in accordance with one embodiment of the present invention;
Fig. 2A is a partially enlarged perspective view along the direction shown by the arrow A in Fig. 1;
Fig. 2B is a partial plan view from the direction of the arrow B in Fig. 2A;
Fig. 3 is a partial cross sectional view taken along the line III-III in Fig. 1;
Fig. 4 is a cross sectional view taken along the line IV-IV of Fig. 3;
Fig. 5A is a partial cross sectional view showing another embodiment of the support member G, showing a cross section viewed from the line VA-VA in Fig. 5B; and
Fig. 5B is a partial plan view from the direction of the arrow I in Fig. 5A.

## DESCRIPTION OF THE PREFERRED EMBODIMENT

One embodiment of the present invention will be described in the following with reference to appended drawings. The following embodiment is an example of actual application of the present invention and it does not intend to limit the technical scope of the present invention.

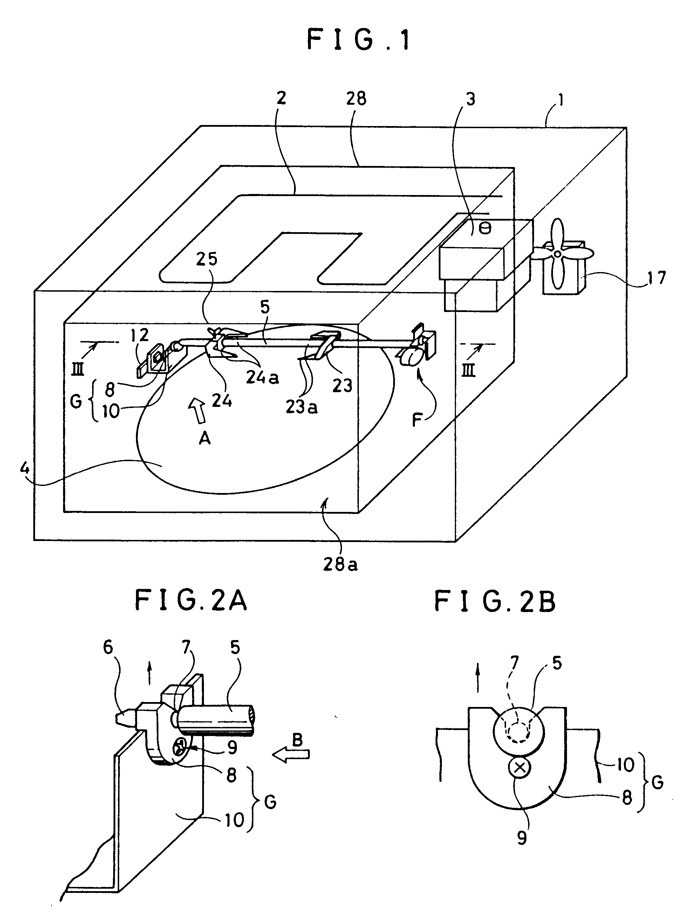

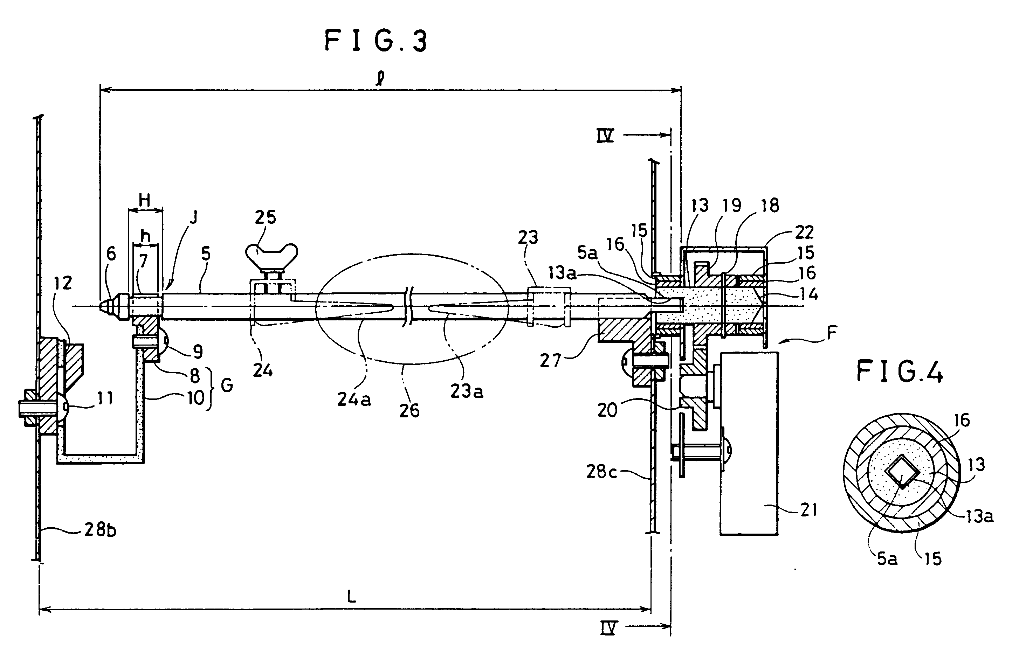

Fig. 1 is perspective view of the inner side of the high frequency heating apparatus in accordance with one embodiment of the present invention, Fig. 2A is a partially enlarged perspective view from the direction shown by the arrow A in Fig. 1, Fig. 2B is a partial plan view from the direction of the arrow B in Fig. 2A, Fig. 3 is a partial cross sectional view taken along the line III-III in Fig. 1, and Fig. 4 is a cross sectional view taken along the line IV-IV in Fig. 3.

The high frequency heating apparatus in accordance with the present embodiment comprises a heating chamber 28, a metal skewer 5 (support means), rotary driving means F, a coupling 13 (coupling means) and a support member G as shown in Fig. 1, 2A, 2B and 3. The heating chamber 28 contains a heater 2 (heating means) for heating a food 26. A high frequency oscillator 3 (high frequency generating means) such as magnetron and the like is provided outside the heating chamber 28 to supply high frequency electromagnetic wave through wave guide into the heating chamber 28. The metal skewer 5 supports the skewered food 26 and it is transversely and rotatably suspended between the side walls of the heating chamber 28. The rotary driving means F is constituted by a driven gear 19 attached on a coupling 13 which can be coupled to a portion 5a to be coupled provided on one end portion of the metal skewer 5, a driving gear 20 provided to engage with the driven gear 19, and a motor 21 having a rotary axis on which the driving gear 20 is provided. The coupling 13 is provided on the outer side of one sidewall 28c of the heating chamber 28 and it couples the rotary driving means F with the portion 5a to be coupled provided on one end portion of the metal skewer 5. The support member G is arranged at a position opposing to the coupling 13 and rotatably supports the groove 7 provided on the other end portion of the metal skewer 5.

A door (not shown) for preventing leak of high frequency energy and an operation panel (not shown) adjacent thereto having a timer, mechanism for opening and closing the door and so on are arranged in front of the opening 28a of the heating chamber 28.

A pan 4 provided on the bottom surface of the heating chamber 28 also serves to receive broth and the like coming out from the food 26.

The metal skewer 5 is formed of a metal bar having circular or rectangular cross section, and made of stainless steel or a rust-proofing metal material such as chrome plated metal. The entire length $\ell$ of the

metal skewer 5 is selected to be shorter than the width L of the opening 28a of the heating chamber 28, that is, the distance between the sidewalls 28b and 28c, by a prescribed distance, for example, about 1 cm. In other words, the entire length $\ell$ of the metal skewer 5 is selected in association with the width L of the opening 28a so as to enable the skewer 5 to be inserted from the opening 28a and the portion 5a to be coupled of the skewer 5 to be easily inserted in and pulled out of the coupling 13. The portion 5a to be coupled has a cross section of a polygon, for example a square such as shown in Fig. 4, in order to prevent slip of the metal skewer 5 in the direction of rotation.

The tip end portion 6 of the metal skewer 5 is pointed so as to easily skewer the food 26.

The groove 7 provided on the other end portion of the metal skewer 5 is to support rotatably the metal skewer 5 and to prevent the metal skewer 5 from slipping out of the coupling 13 during rotation. The width H of the groove 7 is selected to be a little larger than the width h of a spacer 8 constituting the support member G. A step shown by an arrow J may be provided on one end instead of the groove 7 so as to prevent the metal skewer 5 from slipping out of the coupling 13 during rotation.

Therefore, the deformation of the heating chamber 28 derived from the thermal expansion, difference of the width L of the opening 28a derived from the slight difference between each of the product generated in forming the heating chambers 28 can be compensated for. The rotation of the metal skewer 5 can be made smooth.

A fixed fitting 23 to have the food 26 rotate with the metal skewer 5 is fixed on the central portion of the metal skewer 5, by, for example, spot welding. A pair of pawls 23a provided on the fixed fitting 23 pierces the food 26 to prevent rotation of the food 26 about the metal skewer 5.

A movable fitting 24 having a pair of pawls 24a which is similar to that of the fixed fitting 23 is slidably provided at a portion of the metal skewer 5 opposing to the fixed fitting 23. A thumbscrew 25 is provided on the movable fitting 24. By means of the thumbscrew, the movable fitting 24 can be freely moved on the metal skewer 5 to be fixed in correspondence with the size of the food skewered by the metal skewer 5.

The fixed fitting 23, the movable fitting 24 and the thumbscrew 25 are formed of a rust-proof metals such as stainless steel.

The support member G is detachably provided protruding from the other sidewall 28b of the heating chamber 28. The support member G comprises a spacer 8 and a bracket 10.

The spacer 8 is formed of dielectric which is lubricative, heat resistant and has a small high frequency loss, such as tetrafluoroethylene resin. The spacer 8 is fixed on the bracket 10 by means of a fitting screw 9.

The bracket 10 is formed of a rust-proofing metal plate such as stainless steel. The bracket 10 is detachably hanged on a support 12 which is fixed on the sidewall 28b by a fixing screw 11.

The support 12 is formed of dielectric having a high heat resistance and small loss of high frequency energy, such as ceramics.

The spacer 8, fixing screw 9 and the bracket 10 are structured detachable from the sidewall 28b as described above in order to facilitate cleaning of these parts, namely, the spacer 8, fixing screw 9 and the bracket 10, and of the inside of the heating chamber 28. In addition, since those parts are structured as described above, the heating chamber 28 can be effectively used when foods are cooked without using the metal skewer 5.

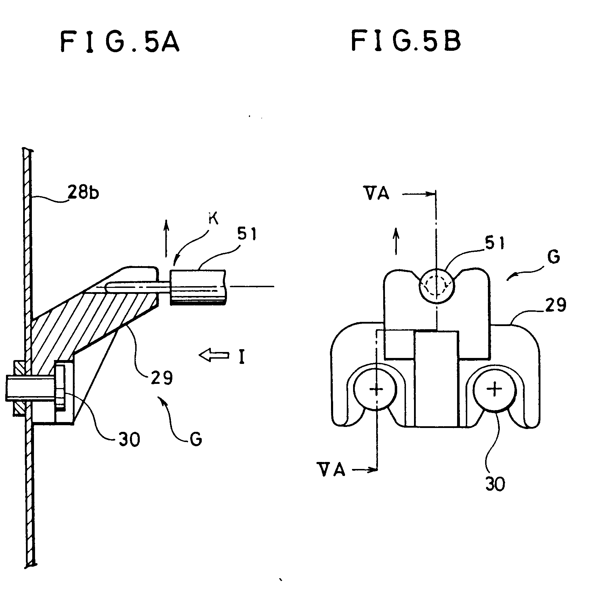

The support member G may be formed of a skewer support in which the spacer 8, the bracket 10 and the support 12 are unitary combined. Fig. 5A is a partial cross sectional view corresponding to the side of the support member G in Fig. 3, showing another embodiment of the support member G formed of one unit. Fig. 5B is a partial plan view from the direction of the arrow I in the Fig. 5A. Fig. 5A is a cross sectional view taken along the line VA-VA in Fig. 5B.

Referring to Figs. 5A and 5B, the skewer support 29 which is an integrated unit serving as the support member G is detachably provided protruding from the other sidewall 28b of the heating chamber 28. The skewer support 29 is formed of a dielectric such as ceramics havind high heat resistance and small loss of high frequency energy. The skewer support 29 is fixed on the sidewall 28b by a fixing screw 30. The metal skewer 51 is rotatably supported by the skewer support 29. A step shown by an arrow K may be provided on one end of the metal skewer 51 so as to prevent the metal skewer 51 from slipping out of the coupling during rotation.

When the support member G is constituted by the skewer support 29, the attachment and detachment of the support member G to and from the sidewall 28b can be carried out only by the attachment and detachment of one unit. Namely, the trouble in attaching and detaching the support member G to and from the sidewall 28b which required attachment and detachment of a plurality of parts, that is, the spacer 8, the bracket 10 and the support 12 can be eliminated.

A coupling 13 coupling the portion 5a of the metal skewer 5 to be coupled with the rotary driving means F is arranged out of one sidewall 28c of the heating chamber 28. The coupling 13 is formed of a rust-proofing metal such as stainless steel.

A hole 13a is provided at one end of the coupling 13 to receive the portion 5a to be coupled of the metal skewer 5. The cross section of the hole 13a is similar to that of the portion 5a to be coupled, as shown in Fig. 4.

The other end portion 14 of the coupling 13 is formed conical. This enables smooth rotation of the coupling 13 even when it is in contact with the fitting angle iron 22 to receive the thrust load.

The coupling 13 is rotatably supported by a set of bearings 16 formed of oil impregnated sintered metal. The bearing 16 is pressed in a metal cylinder 15 formed of, for example, stainless steel. The metal cylinder 15 is attached to the fitting angle iron 22.

A driven gear 19 is mounted on the coupling 13 by means of a roll pin 18. The driven gear 19 is engaged with a driving gear 20 provided on a motor 21. The motor 21 is supported by the fitting angle iron 22.

The driven gear 19 and the driving gear 20 are formed of resin such as mineral reinforced nylon having heat resistance and toughness.

The rotary driving means F structured as described above is arranged next to the high frequency oscillator 3 constituting an electric unit of the high frequency heating apparatus. Consequently, each of the parts constituting the rotary driving means F are heated to rather high temperature by heat radiation from the sidewall 28c and by the heat transmitted through the fitting angle iron 22, the coupling 13, the bearing 16 and the metal cylinder 15. In order to cope with the heating, a fan motor unit 17 is provided for cooling electrical parts. Each of the parts constituting the rotary driving means F can be cooled by the cool air emitted from the fan motor unit 17.

Consequently, those parts employed in a conventional apparatus for insulating heat, such as a heat insulator can be omitted.

A metal bar guide 27 is detachably provided in the inner surface of the sidewall 28 below the coupling 13. The metal bar guide 27 is provided for guiding and facilitating reception of the portion 5a of the metal skewer 5 to be coupled in the coupling 13 provided on the outside of the heating chamber 28.

The high frequency heating apparatus of the present invention is structured in this manner.

The processes of heating foods 26 using the high frequency heating apparatus will be described in the following.

First, the metal skewer 5 which skewers and supports the food 26 is inserted from the opening 28a of the heating chamber 28. Thereafter, the metal skewer 5 is placed on the upper side of the spacer 8 and the metal bar guide 27.

Thereafter, the metal skewer 5 having circular or rectangular cross section is slid in the direction of the coupling 13 with the skewer rotated, and the portion 5a of the metal skewer 5 to be coupled is received by the hole 13a of the coupling 13 without the need of visual checking.

By operating a start button of the operating panel (not shown), the food 26 and the metal skewer 5 are rotated and driven the motor 21. At the same time, the food 26 is heated and cooked by the heater 2 and/or the high frequency oscillator 3. On this occasion, the food 26 may be simultaneously heated and cooked by the heater 2 and the high frequency oscillator 3. After the food is simultaneously heated, the high frequency oscillator 3 may be stopped and only the heater 2 may continue heating. Alternatively, the food 26 may be heated only by the high frequency oscillator 3 at first, and thereafter, it may be heated by the heater 2. In addition, the heating by the high frequency oscillator 3 and the heating by the heater 2 may be alternately repeated.

When the high frequency heating apparatus should be cleaned, the metal skewer 5, the support member G and the metal bar guide 27 are removed from the heating chamber 28, whereby the inside of the heating chamber 28, that is, both sidewalls 28b and 28c become flat with no projection. Therefore, the inside of the heating chamber 28 can be easily cleaned.

In addition, since the coupling portion between the metal skewer 5 and the coupling 13 is structured only by a portion 5a to be coupled having a polygonal cross section, cleaning of the coupling portion of the metal skewer 5 is very easy.

In the high frequency heating apparatus of the present invention, each of the portions constituting the coupling portion between the rotary driving means F and the metal skewer 5 is formed of conductive metal. Therefore, the high frequency heating apparatus can be surely grounded, thereby preventing leak of the radio wave. Namely, the coupling 13 and the bearing 16 in contact with the outer periphery of the coupling 13 to support the same are grounded in the similar manner as the sidewall of the heating chamber 28. The coupling 13 is communicated with the sidewall 28c of the heating chamber 28 through one bearing 16 and the metal cylinder 15 to be grounded. The coupling 13 is communicated with the fixing angle 22 through the other bearing 16 and the metal cylinder 15 so as to be finally communicated with the sidewall 28c of the heating chamber to be grounded.

The spacer 8 and the metal bar guide 27 provided for rotatably receiving the end portion of the metal skewer 5 in the heating chamber 28 are respectively formed of dielectric materials. Therefore, no spark will be generated at the contact portion with the metal skewer 5 during rotation of the skewer 5.

As described above, according to the present invention, the coupling structure of the rotary driving means and the support means can be simplified. Consequently, cleaning of the heating chamber become very easy.

## Claims

1. A mounting apparatus in a high frequency heating apparatus including a heating chamber (28) for receiving food (26) to be heated, said heating chamber having a front opening and at least two opposing sidewalls (28b, 28c), means, including a high frequency source (3), for heating the food (26) in said heating chamber, elongate support means (5) on which the food can be skewered, the length (1) of said support means (5) along the direction of suspension being shorter than the distance (L) between said sidewalls (28b, 28c) and

rotary driving means (F) for rotating said support means (5) in said heating chamber (28), the mounting apparatus comprising:

coupling means (13) for coupling one end portion (5a) of said support means (5) with said rotary drive means (F);

and means for maintaining the support means suspended between the sidewalls (28b, 28c) in the heating chamber (28) for rotation about its axis; characterised in that said coupling means comprises a coupling member (13) rotatably mounted entirely on the outside on one of said sidewalls (28c), and formed at one end portion thereof adjacent that sidewall with an axial hole (13a) which opens to the interior of the heating chamber, and into which said one end portion (5a) of said support means (5) is insertable to effect detachable engagement for transmitting rotational movement of said coupling member to said support means (5), and in that the means for maintaining comprises a support member (G) removably mounted on the other sidewall (28b) for detachably and rotatably supporting the opposite end portion of the support means (5) with the tip (6) of said opposite end portion held at a position spaced apart from the plane of the other sidewall (28b) to provide a gap between the tip (6) and the inner surface of the other sidewall (28b), whereby said support means (5) is axially displaceable to disengage said one and portion thereof from said axial hole (13a) of said coupling means (13) and thereafter removable from said chamber through said front opening thereof.

2. A mounting apparatus according to claim 1, wherein said opposite end portion of said support means (5) has a circumferential groove (7) which engages with said support member (G).

3. A mounting apparatus according to claim 2, wherein the axial length (H) of said groove (7) is greater than the axial length (h) of an engaging portion of said support member (G).

4. A mounting apparatus according to any of claims 1 to 3, wherein said support member (G) is heat resistant, and has a portion formed of a dielectric with small high frequency loss.

5. A mounting apparatus according to any of claims 1 to 4, wherein said support member (G) comprises a support receiving member (8) receiving said opposite end portion of said support means (5); a projecting member (10) provided projecting from said other sidewall (28b) of said heating chamber (28), on which the support receiving member (8) is attached; and a fixing member (12) for fixing the projecting member (10) on said sidewall (28b).

6. A mounting apparatus according to any of claims 1 to 4 wherein said support member (G) comprises a one-piece support receiving member (29) detachably fixed at one portion thereof to said other one of said sidewalls (28b), and having another portion projecting therefrom and receiving said opposite end portion of said support means (51).

7. A mounting apparatus according to claim 6 wherein said one portion is screw-fixed to said sidewall (28b) and said opposite end portion of said support means (51) is of reduced diameter and is received in an upwardly open notch of said projecting other portion.

8. A mounting apparatus according to any preceding claim, wherein said support means (5) comprises a metal bar portion having circular cross section.

9. A mounting apparatus according to claim 8, wherein the tip (6) of said opposite end portion of said support means (5) is pointed.

10. A mounting apparatus according to any preceding claim, wherein said support means (5) comprises fixing means (23, 24) at a central portion thereof for fixing said food (26) on said support means (5).

11. A mounting apparatus according to claim 10, wherein said fixing means (23, 24) comprises two fixing jigs (24, 23) which fix said food (26) by piercing the food from both sides, one of said fixing jigs (24) being attached movably along said support means (5) and the other one of said fixing jigs (23) being fixed on said support means (5).

12. A mounting apparatus according to any preceding claim, wherein said axial hole (13a) has a cross section similar to that of said one end portion (5a) of said support means (5).

13. A mounting apparatus according to claim 12, wherein the cross section of said axial hole (13a) and that of one end portion (5a) of said support means are polygonal.

14. A mounting apparatus according to any preceding claim, wherein the other end portion (14) of said coupling member (13) is conical.

15. A mounting apparatus according to any preceding claim, further comprising a guiding member (27) for guiding said one end portion (5a) of said support means (5) to be received by said axial hole (13a).

16. A mounting apparatus according to claim 15, wherein said guiding member (27) is detachably mounted on the inner face of said one of said sidewalls (28c).

17. A mounting apparatus according to any preceding claim, wherein said coupling member (13) is formed of a rust-proof metal.

18. A mounting apparatus according to any preceding claim, wherein said rotary driving means (F) comprises a driving gear (20) provided on a motor, and a driven gear (19) engaging with the driving gear (20).

19. A mounting , apparatus according to claim 18, wherein said driven gear (19) is attached to said coupling member (13).

## Patentansprüche

1. Befestigungsvorrichtung in einem Hochfrequenz-Heizgerät mit einer Heizkammer (28) für zu erhitzende Nahrungsmittel (26), die mit einer Frontöffnung und mindestens zwei sich gegenüberstehenden Seitenwänden (28b, 28c) versehen ist, mit einer Einrichtung, die eine Hochfrequenzquelle (3) zum Erhitzen des Nahrungsmittels (26) in der Heizkammer aufweist, mit einer langgestreckten Trägereinrichtung (5), auf die das Nahrungsmittel geklemmt werden kann, wobei die Länge (1) der Trägereinrichtung (5) in Aufhängungsrichtung kürzer ist als der Abstand (L) zwischen den Seitenwänden (28b, 28c) und mit einer Drehantriebseinrichtung (F) zum Drehen der Trägereinrichtung (5) in der Heizkammer (28), wobei die Befestigungsvorrichtung

eine Koppeleinrichtung (13) zum Anschluß eines Endabschnittes (5a) der Trägereinrichtung (5) an die Drehantriebseinrichtung (F);

und eine Einrichtung zur drehbaren Halterung der zwischen den Seitenwänden (28b, 28c) in der Heizkammer (28) aufgehängten Trägereinrichtung aufweist; **dadurch gekennzeichnet**, daß die Koppeleinrichtung ein Koppelteil (13) umfaßt, das nur an der Außenseite einer der Seitenwände (28c) drehbar gelagert ist und in einem Endabschnitt benachbart zu dieser Seitenwand ein axiales Loch (13a) aufweist, das sich ins Innere der Heizkammer öffnet und in das der eine Endabschnitt (5a) der Trägereinrichtung (5) einführbar ist, um ein lösbares Eingreifen beim Übertragen der Drehbewegung vom Koppelteil auf die Trägereineinrichtung (5) zu bewirken, und daß die Halterungseinrichtung ein Trägerteil (G) aufweist, das lösbar an der anderen Seitenwand (28b) gelagert ist, um den gegenüberliegenden Endabschnitt der Trägereinrichtung (5) abnehmbar jedoch drehbar zu lagern, wobei dei Spitze (6) des gegenüberliegenden Endabschnitts in einer Position gehalten wird, die von der Ebene der anderen Seitenwand (28b) beabstandet ist, so daß eine Lücke zwischen der Spitze (6) und der Innenfläche der anderen Seitenwand (28b) besteht, wobei die Trägereinrichtung (5) axial verschiebbar ist, um den einen Endabschnitt aus dem axialen Loch (13a) der Koppeleinrichtung (13) herausziehen und die Trägereinrichtung durch die Frontöffnung aus der Kammer entnehmen zu können

2. Befestigungsvorrichtung nach Anspruch 1, bei der der gegenüberliegende Endabschnitt der Trägereinrichtung (5) eine Umfangsnut (7) aufweist, die in das Trägerteil (G) eingreift.

3. Befestigungsvorrichtung nach Anspruch 2, bei der die axiale Länge (H) der Nut (7) größer ist als die axiale Länge (h) eines Eingriffsabschnitts des Trägerteils (G).

4. Befestigungsvorrichtung nach einem der Ansprüche 1 bis 3, bei der das Trägerteil (G) hitzefest ist und einen Abschnitt aufweist, der aus einem dielektrischen Material mit kleiner Hochfrequenz-Verlustleistung besteht.

5. Befestigungsvorrichtung nach einem der Ansprüche 1 bis 4, bei der das Trägerteil (G) ein Trägeraufnahmeteil (8) aufweist, das den gegenüberliegenden Endabschnitt der Trägereinrichtung (5) aufnimmt; ein vorspringendes Teil (10), das so angeordnet ist, daß es von der anderen Seitenwand (28b) der Heizkammer (28), an der das Trägeraufnahmeteil (8) befestigt ist, vorspringt; und ein Befestigungsteil (12) zum Befestigen des vorspringenden Teils (10) an der Seitenwand (28b).

6. Befestigungsvorrichtung nach einem der Ansprüche 1 bis 4, bei der das Trägerteil (G) ein einstückiges Trägeraufnahmeteil (29) aufweist, das mit einem Abschnitt abnehmbar an der anderen Seitenwand (28b) befestigt ist, und einen anderen vorspringenden Abschnitt aufweist, der den gegenüberliegenden Endabschnitt der Trägereinrichtung (51) aufnimmt.

7. Befestigungsvorrichtung nach Anspruch 6, bei der der eine Abschnitt mit einer Schraube an der Seitenwand (28b) befestigt ist und bei der der gegenüberliegende Endabschnitt der Trägereinrichtung (51) verringerten Durchmesser aufweist und von einer nach oben offenen Kerbe im vorspringenden anderen Abschnitt aufgenommen wird.

8. Befestigungsvorrichtung nach einem der vorangehenden Ansprüche, bei der die Trägereinrichtung (5) einen Metallstababschnitt mit kreisförmigem querschnitt aufweist.

9. Befestigungsvorrichtung nach Anspruch 8, bei der die Spitze (6) des gegenüberliegenden Endabschnitts der Trägereinrichtung (5) spitz ausgebildet ist.

10. Befestigungsvorrichtung nach einem der vorangehenden Ansprüche, bei der die Trägereinrichtung (5) Befestigungselemente (23, 24) in einem Mittenabschnitt zum Fixieren des Nahrungsmittels (26) auf der Trägereinrichtung (5) aufweist.

11. Befestigungsvorrichtung nach Anspruch 10, bei der die Befestigungselemente (23, 24) zwei Spannteile (24, 23) aufweisen, die das Nahrungsmittel (26) durch zweiseitiges Einstecken halten, wobei das eine Spannteil (24) entlang der Trägereinrichtung (5) beweglich und das andere Spannteil (23) mit der Trägereinrichtung (5) fest verbunden ist.

12. Befestigungsvorrichtung nach einem der vorangehenden Ansprüche, bei der das axiale Loch 13a) einen querschnitt ähnlich dem des einen Endabschnitts (5a) der Trägereinrichtung (5) aufweist.

13. Befestigungsvorrichtung nach Anspruch 12, bei der das axiale Loch (13) und der eine Endabschnitt (5a) der Trägereinrichtung polygonalen querschnitt aufweisen.

14. Befestigungsvorrichtung nach einem der vorangehenden Ansprüche, bei der der andere Endabschnitt (14) der Koppeleinrichtung (13) konisch ausgebildet ist.

15. Befestigungsvorrichtung nach einem der vorangehenden Ansprüche mit einem Führungsteil (27) zum Führen des vom axialen Loch (13a) aufzunehmenden einen Endabschnitts (5a) der Trägereinrichtung (5).

16. Befestigungsvorrichtung nach Anspruch 15, bei der das Führungsteil (27) abnehmbar an der Innenfläche der einen der Seitenwände (28c) angebracht ist.

17. Befestigungsvorrichtung nach einem der vorangehenden Ansprüche, bei der das Koppelteil (13) aus rostfreiem Metall besteht.

18. Befestigungsvorrichtung nach einem der vorangehenden Ansprüche, bei der die Drehantriebseinrichtung (F) ein von einem Motor angetriebenes Ritzel (20) und ein damit kämmendes Zahnrad (19) aufweist.

19. Befestigungsvorrichtung nach Anspruch 18, bei der das angetriebene Zahnrad (19) am Koppelteil (13) befestigt ist.


**Revendications**

1. Appareil de montage dans un appareil de chauffage à haute fréquence comprenant une chambre de chauffage (28) pour recevoir un aliment (26) à chauffer, ladite chambre de chauffage comportant une ouverture frontale et au moins deux parois latérales en regard (28b, 28c), des moyens, comprenant une source haute fréquence (3), pour chauffer l'aliment (26) dans ladite chambre de chauffage, des moyens de support de forme allongée (5) sur lesquels l'aliment peut être embroché, la longueur (1) desdits moyens de support (5) dans la direction de suspension étant plus courte que la distance (L) entre lesdites parois latérales (28b, 28c), et des moyens de commande de rotation (F) pour faire tourner lesdits moyens de support (5) dans ladite chambre de chauffage (28), l'appareil de montage comprenant: des moyens de couplage (13) pour coupler une partie d'extrémité (5a) desdits moyens de support (5) avec lesdits moyens de commande de rotation (F); et des moyens pour maintenir lesdits moyens de support suspendus entre les parois latérales (28b, 28c) dans la chambre de chauffage (28) en vue d'une rotation autour de son axe; caractérisé en ce que lesdits moyens de couplage comprennent un élément de couplage (13) monté à rotation, entièrement à l'extérieur, sur l'une desdites parois latérales (28c), et comportant, à l'une de ses parties d'extrémité adjacente à cette paroi latérale, un orifice axial (13a) qui débouche sur l'intérieur de la chambre de chauffage, et dans lequel ladite partie d'extrémité (5a) desdits moyens de support (5) peut être insérée pour réaliser un engagement libérable afin de transmettre le mouvement de rotation dudit élément de couplage auxdits moyens de support (5), et en ce que les moyens de maintien comprennent un élément de support (G) monté de façon libérable sur l'autre paroi latérale (28b) en vue de supporter de façon libérable et rotative, la partie d'extrémité opposée des moyens de support (5), le bout (6) de ladite partie d'extrémité opposée étant maintenu en un emplacement espacé du plan de l'autre paroi latérale (28b) afin de ménager un espace entre le bout (6) et la surface interne de l'autre paroi latérale (28b), si bien que lesdits moyens de support (5) sont aptes à être déplacés axialement pour désengager ladite partie d'extrémité de ceux-ci dudit orifice axial (13a) desdits moyens de couplage (13) et, ensuite, à être retirés de ladite chambre à travers ladite ouverture frontale de celle-ci.

2. Appareil de montage selon la revendication 1, dans lequel ladite partie d'extrémité opposée desdits moyens de support (5) comporte une rainure circonférentielle (7) qui s'engage avec ledit élément de support (G).

3. Appareil de montage selon la revendication 2, dans lequel ladite longueur axiale (H) de ladite rainure (7) est supérieure à la longueur axiale (h) d'une partie d'engagement dudit élément de support (G).

4. Appareil de montage selon l'une quelconque des revendications 1 à 3, dans lequel ledit élément de support (G) est thermorésistant, et comporte une partie réalisée en une matière diélectrique à faible perte d'énergie haute fréquence.

5. Appareil de montage selon l'une quelconque des revendications 1 à 4, dans lequel ledit élément de support (G) comprend un élément de réception de support (8) recevant ladite partie d'extrémité opposée desdits moyens de support (5); un élément saillant (10) prévu de façon à faire saillie à partir de ladite autre paroi latérale (28b) de ladite chambre de chauffage (28), sur lequel est fixé l'élément de réception de support (8); et un élément de fixation (12) pour fixer l'élément saillant (10) sur ladite paroi latérale (28b).

6. Appareil de montage selon l'une quelconque des revendications 1 à 4, dans lequel ledit élément de support (G) comprend un élément de réception de support en une seule pièce (29) fixé de façon libérable au niveau d'une de ses parties à ladite autre paroi latérale (28b), et comportant une autre partie en taisant saillie et recevant ladite partie d'extrémité opposée desdits moyens de support (51).

7. Appareil de montage selon la revendication 6, dans lequel ladite partie est fixée par vis à ladite paroi latérale (28b) et ladite partie d'extrémité opposée desdits moyens de support (51) présente un diamètre réduit et est reçue dans une encoche ouverte vers le haut de ladite autre partie saillante.

8. Appareil de montage selon l'une quelconque des revendications précédentes, dans lequel lesdits moyens de support (5) comprennent une partie métallique formant barre de section transversale circulaire.

9. Appareil de montage selon la revendication 8, dans lequel le bout (6) de ladite partie d'extrémité opposée desdits moyens de support (5) est pointu.

10. Appareil de montage selon l'une quelconque des revendications précédentes, dans lequel lesdits moyens de support (5) comprennent des moyens de fixation (23, 24) au niveau d'une partie centrale de ceux-ci pour fixer ledit aliment (26) sur lesdits moyens de support (5).

11. Appareil de montage selon la revendication 10, dans lequel lesdits moyens de fixation (23, 24) comprennent deux dispositifs de fixation (24, 23) qui fixent ledit aliment (26) par perçage des deux côtés de l'aliment, l'un desdits dispositifs de fixation (24) étant attaché de façon mobile le long desdits moyens de support (5) et l'autre dispositif de fixation (23) étant fixé sur lesdits moyens de support (5).

12. Appareil de montage selon l'une quelconque des revendications précédentes, dans lequel ledit orifice axial (13a) présente une section transversale similaire à celle de ladite partie d'extrémité (5a) desdits moyens de support (5).

13. Appareil de montage selon la revendication 12, dans lequel la section transversale dudit orifice axial (13a) et celle de la partie d'extrémité (5a) desdits moyens de support sont polygonales.

14. Appareil de montage selon l'une quelconque des revendications précédentes, dans lequel ladite autre partie d'extrémité (14) dudit élément de couplage (13) est conique.

15. Appareil de montage selon l'une quelconque des revendications précédentes, comprenant en outre un élément de guidage (27) pour guider ladite partie d'extrémité (5a) desdits moyens de support (5) devant être reçue par ledit orifice axial (13a).

16. Appareil de montage selon la revendication 15, dans lequel ledit élément de guidage (27) est monté de façon libérable sur la face interne de ladite paroi latérale.

17. Appareil de montage selon l'une quelconque des revendications précédentes, dans lequel ledit élément de couplage (13) est réalisé un un métal antirouille.

18. Appareil de montage selon l'une quelconque des revendications précédentes, dans lequel lesdits moyens de commande de rotation (F) comprennent un engrenage d'entraînement (20) prévu sur un moteur, et un engrenage entraîné (19) s'engageant avec l'engrenage d'entraînement (20).

19. Appareil de montage selon la revendication 18, dans lequel ledit engrenage entraîné (19) est fixé audit élément de couplage (13).

# F I G . 1

# F I G . 2A

# F I G . 2B

# FIG.3

# FIG.4

EP 0 310 450 B1

# FIG.5A

# FIG.5B